(19) Europäisches Patentamt
European Patent Office
Office européen des brevets

(11) **EP 1 256 154 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **00943560.3**

(22) Anmeldetag: **05.05.2000**

(51) Int Cl.:
**H02H 7/085** *(2006.01)*

(86) Internationale Anmeldenummer:
**PCT/DE2000/001425**

(87) Internationale Veröffentlichungsnummer:
**WO 2000/074195 (07.12.2000 Gazette 2000/49)**

(54) **VERFAHREN ZUM ELEKTRONISCHEN ÜBERWACHEN UND STEUERN EINES PROZESSES ZUM VERSTELLEN BEWEGLICHER TEILE**

METHOD OF ELECTRONICALLY MONITORING AND CONTROLLING A PROCESS FOR THE ADJUSTMENT OF MOBILE PARTS

PROCEDE POUR SURVEILLER ET REGULER ELECTRONIQUEMENT UN PROCESSUS DE DEPLACEMENT DE PIECES MOBILES

(84) Benannte Vertragsstaaten:
**DE ES FR GB IT**

(30) Priorität: **02.06.1999 DE 19925372**

(43) Veröffentlichungstag der Anmeldung:
**13.11.2002 Patentblatt 2002/46**

(73) Patentinhaber: **ROBERT BOSCH GMBH**
**70442 Stuttgart (DE)**

(72) Erfinder:
• **KLIFFKEN, Markus**
**D-77815 Buehl (DE)**
• **WOLF, Joerg**
**D-76139 Karlsruhe (DE)**
• **KRUEGER, Hartmut**
**D-77830 Buehlertal (DE)**

(56) Entgegenhaltungen:
**DE-A- 19 601 359          DE-A- 19 633 941**

**Beschreibung**

Stand der Technik

Die Erfindung betrifft ein Verfahren zum elektronischen Überwachen und Steuern eines Prozesses zum Verstellen beweglicher Teile, insbesondere von Fenstern und Schiebe-Hebedächern eines Kraftfahrzeugs zur Gewährleistung eines Einklemmschutzes.

Die bis heute bekannten Verfahren zur Realisierung eines Einklemmschutzes lassen sich grob in direkte und indirekte Verfahren unterteilen.

Bei den direkten Verfahren wird die Einklemmkraft explizit mit entsprechend angeordneten Sensoren gemessen und bei Überschreiten eines vorgegebenen Schwellwerts der Antrieb stillgesetzt oder reversiert. Häufig werden dabei sogenannte Sensorleisten benutzt, die in die Dichtungen des Anschlages integriert sind. Der Nachteil der direkten Verfahren liegt im hohen instrumentellen Aufwand sowie in der relativ geringen Zuverlässigkeit und Beständigkeit gegenüber Alterungsprozessen.

Die gängigen indirekten Verfahren basieren auf der Auswertung anderer Meßgrößen, die mit der Kraft in Zusammenhang stehen. Derartige Meßgrößen sind typischerweise der durch den Antrieb fließende Strom, die Antriebsgeschwindigkeit des bewegten Teils oder die Drehzahl eines rotierenden Teils des Antriebs.

Die indirekten Verfahren nutzen die Tatsache, daß sich die mit der Kraft in Zusammenhang stehenden Meßgrößen im Einklemmfall ebenfalls ändern und sich somit zur frühzeitigen Erkennung des Einklemmzustandes eignen. Sie sind jedoch ebenfalls mit einem hohen technischen Aufwand verbunden und grundsätzlich anfällig gegenüber sich verändernden externen Einflüssen. So müssen z.B. Fahrzeugbewegungen, Temperatur- und Witterungsschwankungen oder Alterungsprozesse mit berücksichtigt werden.

Bei einer Kombination beider Verfahren kann die Zuverlässigkeit zwar gesteigert werden, allerdings steigt damit der technische Aufwand weiter.

DE 196 01 359 A1 beschreibt ein Verfahren zum elektronischen Überwachen und Steuern eines Prozesses zum Verstellen beweglicher Teile. Bei diesem bekannten Verfahren werden als charakteristische Größen für eine Erkennungseinrichtung im Wesentlichen elektrische Ansteuergrößen eines Motors herangezogen und einem Modell zugeführt. Zunächst erfolgt eine Lernphase, indem das Modell in einer Normalsituation des Antriebs mit Daten gespeist wird. Ein von dem Normalzustand abweichender abnormaler Zustand wird dann später durch Vergleich mit dem Modell festgestellt. Für das analytische, dynamische Modell des Antriebssystems werden elektrische Kenngrößen zugrunde gelegt, um auf den Antrieb wirkende Last- und Widerstandsmomente zu berechnen.

DE 196 33 941 A1 schlägt vor, bei einem Stellantrieb zur Bewegung von Fenstern an Kraftfahrzeugen eine Antriebskraft des Fensters entsprechend einem zuvor aufgenommenen Reibungskraft-Hubweg-Diagramm steuerungsabhängig festzustellen und eine die zulässige Schließkraft erhöhte Reibungskraft zu berücksichtigen. Das Diagramm kann derart aktualisiert werden, dass sich Unterschiede bei der Herstellung des Kraftfahrzeuges aufgrund von Alterung, Temperatur, Luftfeuchtigkeit, Verschmutzung usw. berücksichtigen lassen.

Vorteile der Erfindung

Das erfindungsgemäße Verfahren zum elektronischen Überwachen und Steuern eines Prozesses zum Verstellen beweglicher Teile mit den Merkmalen des Hauptanspruchs hat den Vorteil, daß bei geringerem technischen Aufwand zur Umsetzung des Verfahrens nicht nur eine wesentlich größere Zuverlässigkeit sondern auch eine weit höhere Sensibilität und Schnelligkeit erreicht wird.

Das Verfahren basiert auf einem völlig neuen Ansatz, der von einer physikalischen Beschreibung des Verstellprozesses ausgeht. Diese Beschreibung erfolgt auf der Grundlage eines den Verstellprozeß entweder vollständig oder zumindest in wesentlichen Teilen wiedergebenden Modells, welches in einer Erkennungseinrichtung abgelegt ist. Mit diesem Modell wird unter Berücksichtigung gemessener und für den Prozeß charakteristischer Eingangs- und Ausgangsgrößen ein Auffinden und Optimieren von typischen Prozeßgrößen durchgeführt. Das Auffinden der Prozeßgrößen kann beispielsweise auf analytischer oder iterativer Basis erfolgen.

Mittels einer Bewertung der typischen Prozeßgrößen durch Vergleich mit in der Erkennungseinrichtung abgelegten Prozeßgrößen kann eine Abweichung des Prozeßverlaufes vom Normalverhalten nicht nur eindeutig und höchst sensibel erkannt werden, sie kann darüberhinaus auch differenziert gedeutet werden.

Je nach Bewertung wird eine spezielle Korrekturgröße für den Prozeß ermittelt, die dem Prozeß zugeführt wird und ihn beeinflußt. Signalisieren die Prozeßgrößen beispielsweise bei einem Fenster- oder Schiebedachschließvorgang, daß eine menschliche Hand eingeklemmt wird, dann wird die Korrekturgröße den Prozeß so beeinflussen, daß beispielsweise ein Reversieren oder ein Stoppen des elektronischen Antriebs erfolgt. Vorstellbar ist aber auch, daß bei Erkennen einer partiellen Schwergängigkeit der Prozeß dahingehend beeinflußt wird, daß der Motorstrom kurzzeitig erhöht wird.

Die im Anspruch 1 beschriebene Methode zum Auffinden und Optimieren bestimmter Prozeßgrößen stellt eine spezielle Methode zur Echtzeit-Auswertung eines gemessenen Werteverlaufs dar. Diese Echtzeitauswertung gewährleistet einen unmittelbaren Zugriff auf nicht direkt meßbare Größen, die für die Überwachung des Vorgangs höchst relevant sind und wichtige Informationen enthalten.

So ist es von Vorteil, wenn das in der Erkennungseinrichtung abgelegte und den Prozeß beschreibende Modell die mechanischen oder hydraulisch/pneumatischen Prozesse abbildet, weil damit die Überwachung des Verstellvorganges erst ermöglicht wird.

Weiterhin vorteilhaft ist, wenn das Modell die Newtonsche Gleichung in der allgemeinen, vektoriellen Form

$$m \cdot \vec{\ddot{x}} = \vec{F}$$

beinhaltet. Dabei ist m eine Masse, beispielsweise die Masse des beweglichen Teils, und F die Summe der wirkenden Kräfte, beispielsweise der Kräfte, die auf das bewegliche Teil wirken. Die Größe F kann von verschiedenen Parametern abhängig sein, beispielsweise von Zustandsgrößen wie dem Ort x oder eine der zeitlichen Ableitungen von x, sowie von speziellen Dämpfungs- und Reibungsparametern.

Die Gleichung kann in einer vorteilhaften, spezielleren Form die Gestalt

$$m \cdot \vec{\ddot{x}} = \vec{K} \cdot I + d \cdot \vec{\dot{x}} + c \cdot \vec{x} + \vec{F}_S + m \cdot \vec{g}$$

annehmen. Durch diese Gleichung wird eine Bewegung eines beweglichen Teils beschrieben, welches einer Dämpfung d, einer Federsteifigkeit c = c(t), einer antreibenden Kraft $F_A = K \cdot I$ sowie einer Störkraft $F_S$ unterliegen kann.

Wichtig für das erfindungsgemäße Verfahren ist primär nicht das Lösen obiger Differentialgleichung, also das Auffinden der Funktion x(t), sondern in einer ersten Verfahrensvariante das Auffinden und Optimieren von Prozeßgrößen, welche für die Erkennung des Einklemmvorganges und dessen differenzierte Deutung relevant sind, also speziell der Parameter c und d oder auch von davon abhängigen Größen.

In einer weiteren Verfahrensvariante wird statt der Parameter c und d wenigstens eine Ausgangsgröße unter Berücksichtung der Struktur obigen Differentialgleichungstyps berechnet und mit den entsprechenden gemessenen Ausgangsgrößen verglichen.

Somit findet parallel zum realen Vorgang eine Simulation statt, die es ebenfalls erlaubt, eine Abweichung vom Normalfall und insbesondere einen Einklemmvorgang sicher zu erkennen.

Beide Verfahrensvarianten werden im folgenden noch ausführlich beschrieben.

Die Differentialgleichung des in der Erkennungseinrichtung abgelegten Modells ist nicht auf eine spezielle Form beschränkt, wichtig ist lediglich, daß mit ihr die mechanischen oder die hydraulisch/pneumatischen Prozesse beschreibbar sind. Sie kann beispielsweise auch noch weitere Störgrößen berücksichtigen oder in alternativen Darstellungen beispielsweise in den Frequenzbereich transformiert werden.

Durchaus denkbar ist auch, daß das die verschiedenen Prozesse abbildende Modell lediglich aus Datenfeldern besteht, aus denen die optimalen typischen Prozeßgrößen herausgezogen und mit den berechneten Prozeßgrößen verglichen werden. Durch die in den Unteransprüchen angegebenen Maßnahmen sind vorteilhafte Weiterbildungen des Verfahrens nach dem Hauptanspruch möglich.

Ein weiterer Vorteil ergibt sich, wenn in das Modell zur Beschreibung des Verstellvorganges bzw. des Öffnungs- und Schließvorganges eine Differentialgleichung mit eingeht, die den Stromaufbau im elektronischen Antrieb beschreibt.

Eine derartige Gleichung für die Antriebskraft $F_A$ in der allgemeinen Form

$$F_A = f(U, I)$$

liefert einen Zusammenhang zwischen den mechanischen und den elektrischen Größen zur Beschreibung des Verstellprozesses.

Eine mögliche Differentialgleichung für permanenterregte Gleichstrommotoren hat die allgemeine Form

$$\vec{K} \cdot \vec{x} = -\left(L \cdot \dot{I}\right) + U + R \cdot I$$

Mit obiger Gleichung für den Stromaufbau läßt sich besagter Zusammenhang zwischen den mechanischen Größen der Bewegungsgleichung und den elektrischen Größen, also dem durch den elektronischen Antrieb fließenden Strom I, der am Antrieb anliegenden, elektrischen Spannung U und dem elektrischen Widerstand R des Antriebs, herstellen.

Somit kann in vorteilhafter Weise als Eingangsgröße für das erfindungsgemäße Verfahren die am elektronischen Antrieb anliegende Spannung U verwendet werden.

Als die der Erkennungseinrichtung zugeführten Ausgangsgrößen eignen sich der durch den elektronischen Antrieb fließende Strom I und/oder die Position x des beweglichen Teils und/oder eine zur Position x proportionale Winkelstellung φ eines rotierenden Teiles des elektronischen Antriebs und/oder eine der zeitliche Ableitungen der Position x bzw. der Winkelstellung φ oder eine geeignete Verknüpfung aus den genannten Größen.

Im folgenden wird die erste Variante des Verfahrens in allgemeiner Form beschrieben, bei der das Auffinden und Optimieren der Prozeßgrößen auf der Grundlage des sogenannten Parameteridentifikationsmodells durchgeführt wird.

Im Rahmen dieser Variante werden die für den Verstellprozeß bzw. den Öffnungs- und Schließvorgang charakteristischen Parameter, nämlich die Federsteifigkeit c und der Dämpfungsterm d oder davon abhängige Größen berechnet und optimiert. Der Optimierungsprozeß erfolgt auf der Grundlage des den Prozeß beschreibenden Modells unter Berücksichtigung der gemessenen Eingangs- und Ausgangsgrößen, wobei in der Erkennungseinrichtung die den gemessenen Ausgangsgrößen entsprechenden Ausgangsgrößen berechnet werden. Die Parameter c und d werden dann in der Weise angepaßt, daß die berechneten Ausgangsgrößen mit den realen, gemessenen Ausgangsgrößen möglichst gut übereinstimmen.

Anders ausgedrückt wird auf der Grundlage gemessener Daten ein Satz von Parametern bestimmt, anhand dessen sehr zuverlässig auf eine Abweichung vom Normalverlauf, beispielsweise auf einen Einklemmvorgang geschlossen werden kann.

Die beiden Parameter c und d, also die Federsteifigkeit c und der Dämpfungsterm d, steigen im Einklemmfall sehr stark an und sind zum Überwachen eines Verstellvorgangs und zum Erkennen eines Einklemmvorgangs besonders gut geeignet. Verändern sich die berechneten und optimierten Parameter, insbesondere die Federsteifigkeit c, ist davon auszugehen, daß ein anormaler Zustand, beispielsweise ein Einklemmzustand vorliegt und es können Maßnahmen zum Reversieren oder Stoppen des elektronischen Antriebs eingeleitet werden.

Ein weiterer Vorteil dieser Verfahrensvariante liegt darin, daß durch das Optimieren der relevanten Parameter der Einklemmvorgang differenziert auswertbar ist. Beispielsweise gibt der absolute Wert des Parameters c oder auch seine zeitliche Entwicklung Aufschluß darüber, ob ein weicher oder ein harter Gegenstand eingeklemmt wird. So kann beispielsweise erkannt werden, ob sich relativ weiche Körperteile eines Menschen, wie z. B. der Hals, oder relativ harte Körperteile, wie z.B. der Kopf, zwischen dem Fenster und dem Fensterrahmen befinden. Auch für menschliche Gliedmaßen liegen typische Werte des Parameters c vor, so daß auch solche Einklemmvorgänge erkennbar sind.

Anhand des absoluten Wertes des Dämpfungsparameters d oder dessen zeitlicher Entwicklung kann gezielt auf bestimmte Systemgrößen geschlossen werden, beispielsweise ob an einer bestimmten Stelle lediglich eine Schwergängigkeit vorliegt, von der akut keine Einklemmgefahr ausgeht.

Diese differenzierte Deutung ermöglicht es nicht nur eindeutige Einklemmsituationen sicher zu erkennen, sondern auch optimale Maßnahmen zu deren Beseitigung zu ergreifen. Außerdem erlaubt sie die Adaption des Systems an sich verändernde Bedingungen, beispielsweise das Heraufsetzen des Schwellwertes für das Stoppen oder Reversieren des Antriebs bei unkritischen Schwergängigkeiten.

Das Auffinden und Optimieren der beiden Parameter der Dämpfung d und der Federsteifigkeit c kann noch verbessert werden, wenn zusätzlich eine Störgröße $F_S$, also beispielsweise externe Kräfte, die von Fahrzeugbewegungen verursacht werden, mitbestimmt wird. Gelingt es nämlich diese Störgrößen herauszufiltern, dann wird eine höhere Genauigkeit und Sensibilität erreicht.

Eine zweite vorteilhafte Variante des Verfahrens besteht darin, daß die fortlaufende Optimierung der typischen Prozeßgrößen auf der Grundlage des sogenannten Beobachtungsmodells durchgeführt wird. Im Rahmen dieser zweiten Variante werden nicht die das System bestimmenden Parameter der Federsteifigkeit c und der Dämpfung d optimiert, sondern vielmehr ein Auffinden und Optimieren bestimmter und wenigstens einer Ausgangsgröße durchgeführt.

Das dieser Variante zugrunde liegende Prinzip ist eine Simulation des Verstellvorganges bzw. des Öffnungs- und Schließvorganges in der Erkennungseinrichtung, die parallel zu dem realen Vorgang abläuft. Um diese Echtzeit-Simulation zu starten, ist eine gemessene Eingangsgröße erforderlich, mit der eine Ausgangsgröße berechnet wird. Die Berechnung der Ausgangsgröße kann fortlaufend korrigiert werden, indem zusätzlich die gemessene Ausgangsgröße berücksichtigt wird. Somit wird der Genauigkeitsgrad der Simulation sukzessive erhöht.

Genau wie bei dem ersten Verfahren der Parameteridentifikation wird auch hier eine berechnete Systemgröße an eine gemessene Systemgröße optimal angepaßt. Zum eigentlichen Erkennen des Einklemmvorgangs werden sogenannte Residuen gebildet, die den Unterschied zwischen den gemessenen Ausgangsgrößen und den optimierten Ausgangsgrößen wiedergeben.

Diese Residuen können beispielsweise durch Entkopplung von externen Störkräften so ausgelegt werden, daß sie sehr empfindlich auf einen tatsächlichen Einklemmvorgang reagieren, und gleichzeitig unempfindlich gegenüber externen Störungen sind.

Zeichnung

In der Zeichnung sind zwei Ausführungsbeispiele eines erfindungsgemäßen Verfahrens dargestellt und in der nachfolgenden Beschreibung näher erläutert.

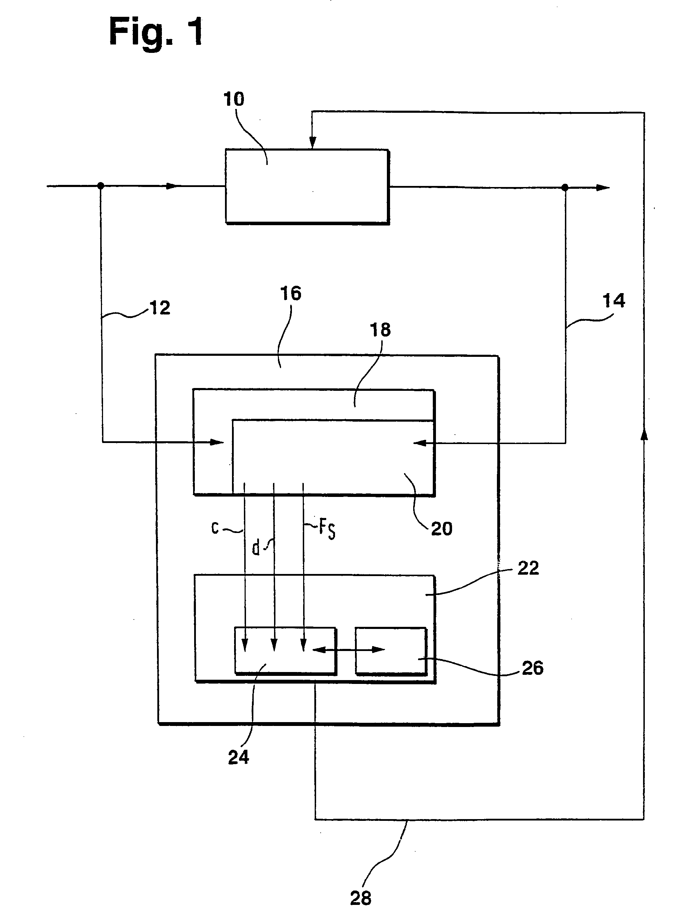

Es zeigen Figur 1 einen Ablauf des erfindungsgemäßen Verfahrens nach einer ersten Variante,

Figur 2 einen Ablauf des erfindungsgemäßen Verfahrens nach einer zweiten Variante,

und Figur 3 eine Vorrichtung zur Anwendung der beschriebenen Verfahrensvarianten.

Beschreibung der Ausführungsbeispiele

Das in Figur 1 dargestellte Ausführungsbeispiel eines erfindungsgemäßen Verfahrens zum elektronischen Überwachen und Steuern eines Prozesses zum Verstellen beweglicher Teile zeigt eine erste Variante, bei der als Eingangsgröße 12 eine Spannung U an einem zu überwachenden System 10 anliegt. Die Ausgangsgröße 14 ist die Position des zu verstellenden Teils. Die Eingangsgröße 12 und die Ausgangsgröße 14 des zu überwachenden Systems 10 werden einer Erkennungseinrichtung 16 zugeführt. Diese Erkennungseinrichtung 16 enthält einen Optimierungsbaustein 18, in dem als die mechanischen Prozesse abbildendes Modell die Differentialgleichungen

$$m \cdot \ddot{\vec{x}} = \vec{K} \cdot I + d \cdot \dot{\vec{x}} + c \cdot \vec{x} + \vec{F}_S + m \cdot \vec{g}$$

und

$$\vec{K} \cdot \dot{\vec{x}} = -\left( L \cdot \dot{I} \right) + U + R \cdot I$$

abgelegt sind.

Dabei ist K eine Konstante, $\dot{x}$ die Geschwindigkeit des beweglichen Teils, L die Induktivität des Antriebs, I der elektrische Strom im Antrieb, $\dot{I}$ die zeitliche Änderung des elektrischen Stroms im Antrieb, U die am Antrieb anliegende elektrische Spannung, R der elektrische Widerstand des Antriebs, K·I die Antriebskraft $F_A$, d ein Dämpfungsterm, c die Federsteifigkeit, $F_S$ eine Störkraft und g die Gravitationskonstante.

In einer Untereinheit 20 des Optimierungsbausteins 18 wird auf der Grundlage dieses Modells und mit einem vorgegebenen, ersten Satz von Parametern für die Federsteifigkeit c, dem Dämpfungsterm d und der Störgröße $F_S$ die Ausgangsgröße 14, also die Position des zu verstellenden Teils, berechnet.

Mit Hilfe eines Vergleichs der auf dieser Grundlage berechneten Position mit der gemessenen Position wird entschieden, ob dieser erste Parametersatz im Rahmen einer vorgegebenen Genauigkeit zur Bewertung des Prozesses weiter benutzbar ist, oder ob die Parameter c, d und $F_S$ beispielsweise aufgrund schwankender Umgebungsbedingungen an das geänderte System angepaßt werden müssen. Ist letzteres der Fall, so wird der Satz von Parametern so lange optimiert, bis das berechnete Systemverhalten bzw. die berechnete Position mit dem gemessenen Systemverhalten bzw. der gemessenen Position ebenfalls im Rahmen einer vorgegebenen Genauigkeit übereinstimmt.

Die so optimierten und gefundenen Parameter werden anschließend einem Zwischenspeicher 24 als Teil eines Vergleichsbausteins 22 zugeführt. In diesem Vergleichsbaustein ist weiterhin ein Speicher 26 enthalten, in dem Vergleichswerte für den berechneten Satz von Parametern abgelegt sind.

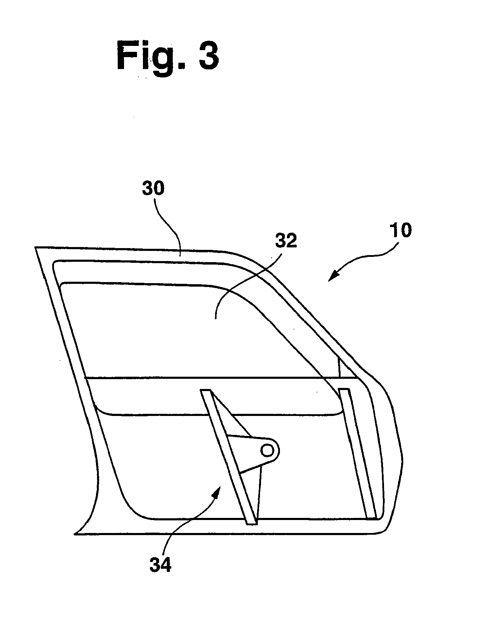

Die Bewertung der berechneten und optimierten Parameter erfolgt auf der Grundlage eines Vergleichs mit den im Speicher 26 abgelegten und für den jeweiligen Prozeßschritt relevanten Parametern. In Abhängigkeit davon wird eine Korrekturgröße 28 ermittelt, die dem zu überwachenden System 10 bzw. dem laufenden Prozeß zugeführt wird. Dies ermöglicht es, den Prozeß je nach ermittelter Korrekturgröße 28 mehr oder weniger stark zu beeinflussen. Beispielsweise kann bei starker Abweichung der optimierten Federsteifigkeit c von der im Speicher 26 abgelegten Federsteifigkeit c auf einen Einklemmvorgang geschlossen und ein Reversieren oder Stoppen des in Figur 3 dargestellten elektronischen Antriebs 34 eingeleitet werden.

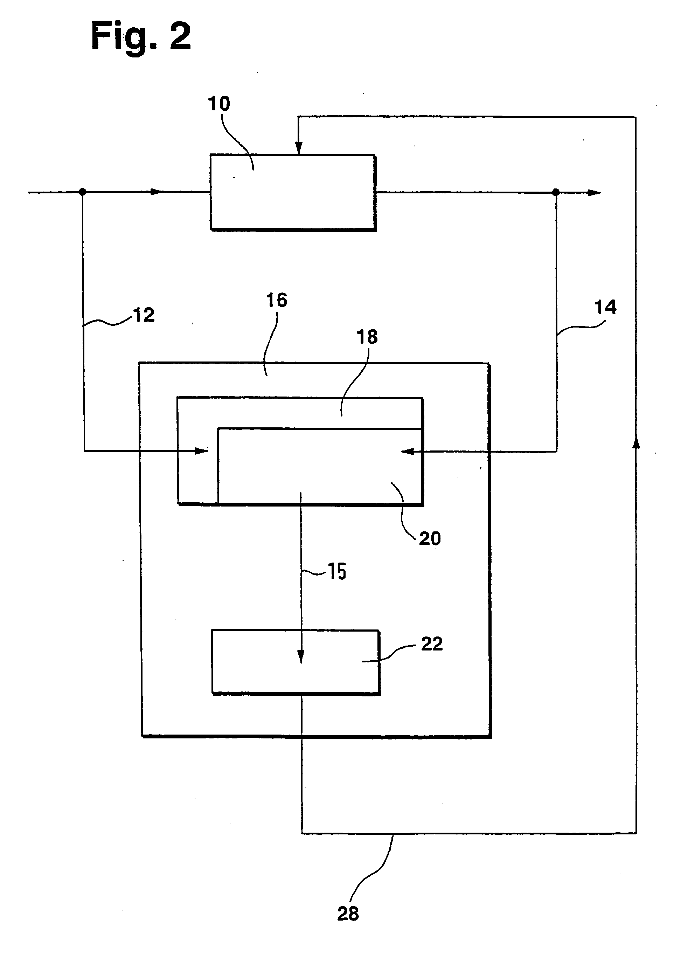

In Figur 2 ist eine zweite Verfahrensvariante dargestellt, bei der für gleiche Positionen wie in Figur 1 gleiche Bezugszahlen verwendet werden.

Bei dieser zweiten Verfahrensvariante wird in der Erkennungseinrichtung 16 der Verstellprozeß simuliert. Dies geschieht unter Berücksichtigung der gemessenen Eingangsgröße 12, in dem Fall der Spannung U, und der gemessenen Ausgangsgröße 14, hier die Position des zu verstellenden Teils, wobei die Ausgangsgröße fortlaufend berechnet und an die gemessene Ausgangsgröße 14 angepaßt wird. Ist die Anpassung innerhalb gewisser Grenzen optimal, dann wird in der Untereinheit 20 die Differenz 15 zwischen berechneter und gemessener Ausgangsgröße gebildet. Diese Differenzen 15, die als Residuen bezeichnet werden, werden an den Bewertungsbaustein 22 weitergeleitet, der eine dem Residuum entsprechende Korrekturgröße 28 an das zu überwachende System 10 schickt. Die Korrekturgröße 28 beeinflußt genau wie in dem ersten Ausführungsbeispiel den zu überwachenden Prozeß.

In Figur 3 ist als Beispiel für ein zu überwachendes System eine Fahrzeugtür 10 mit einem Türrahmen 30 und einer Fensterscheibe 32 dargestellt. Die Fensterscheibe 32 wird von einem elektronischen Antriebssystem 34 angetrieben und erlaubt das Öffnen und Schließen des Fensters 32.

Mit den beiden schon ausführlichen beschriebenen Verfahrensvarianten läßt sich somit eine Überwachung des Öffnungs- und Schließvorganges des in Figur 3 dargestellten Fensters einer Kraftfahrzeugtür durchführen.

## Patentansprüche

1.  Verfahren zum elektronischen Überwachen und Steuern eines Prozesses zum Verstellen beweglicher Teile, insbesondere von Fenstern und Schiebedächern eines Kraftfahrzeuges, zur Gewährleistung eines Einklemmschutzes mit mindestens folgenden Schritten:

    - Zuführen von für den Prozess charakteristischen Eingangs- (12) und Ausgangsgrößen (14) zu einer Erkennungseinrichtung (16),
    - Auffinden und Optimieren von typischen Prozessgrößen eines in der Erkennungseinrichtung (16) abgelegten und den Prozess beschreibenden Modells, das die mechanischen Prozesse abbildet, wobei ein eine Differentialgleichung beinhaltendes Modell der allgemeinen Form

$$m \cdot \vec{\ddot{x}} = \vec{K} \bullet I + d \bullet \vec{\dot{x}} + c \bullet \vec{\dot{x}} + \vec{F}_S + m \bullet \vec{g}$$

    herangezogen wird, mit
    m = Masse,
    $\ddot{x}$ = Beschleunigung,
    K = Konstante,
    I = Strom,
    K•I = Antriebskraft $F_A$,
    d = Dämpfungsterm,
    $\dot{x}$ = Geschwindigkeit,
    c = Federsteifigkeit,
    $F_S$ = Störkraft,
    g = Gravitationskonstante
    - Bewerten der optimierten Prozessgrößen durch Vergleich mit in der Erkennungseinrichtung (16) abgelegten Prozessgrößen,
    - Ermitteln einer Korrekturgröße (28) für den Prozess in Abhängigkeit des Vergleiches,
    - Beeinflussen des Prozesses durch Zuführen der ermittelten Korrekturgröße (28) zu dem Prozess.

2.  Verfahren nach einem der vorhergehenden Ansprüche,
    **dadurch gekennzeichnet,**
    **dass** in der Erkennungseinrichtung (16) eine Beschreibung Stromverlaufs in einem elektronischen Antrieb (34) in das Modell mit eingeht

3.  Verfahren nach Anspruch 2,
    **dadurch gekennzeichnet,**

**dass** in das Modell eine Gleichung in der allgemeinen Form

$$F_A = f(U, I)$$

mit eingeht.

4. Verfahren nach Anspruch 3,
**dadurch gekennzeichnet,**
**dass** bei permanenterregten Gleichstrommotoren als Gleichung für den Stromaufbau eine Differentialgleichung in der Form

$$\vec{K} \bullet \vec{\dot{x}} = -(L \bullet \dot{I}) + U + R \bullet I$$

herangezogen wird, wobei
K = Konstante,
$\dot{x}$ = Geschwindigkeit des beweglichen Teils,
L = Induktivität des Antriebs,
I = elektrischer Strom im Antrieb,
$\dot{I}$ = zeitliche Änderung des elektrischen Stroms im Antrieb,
U = elektrische Spannung am Antrieb,
R = elektrischer Widerstand des Antriebs.

5. Verfahren nach einem der Ansprüche 2 bis 4,
**dadurch gekennzeichnet,**
**dass** als Eingangsgröße (12) die am elektronischen Antrieb (34) anliegende Spannung U verwendet wird.

6. Verfahren nach einem der vorhergehenden Ansprüche,
**dadurch gekennzeichnet,**
**dass** als Ausgangsgröße (14) der durch den elektronischen Antrieb (34) fließende Strom I und/oder die Position x der beweglichen Teile und/oder eine zur Position x proportionale Winkelstellung φ eines rotierenden Teils des elektronischen Antriebs (34) und/oder eine der zeitlichen Ableitungen der Position x bzw. der Winkelstellung φ herangezogen wird.

7. Verfahren nach einem der vorhergehenden Ansprüche,
**dadurch gekennzeichnet,**
**dass** zum Überwachen des Prozesses die Optimierung der Federsteifigkeit c und/oder des Dämpfungsterms d unter Berücksichtigung der gemessenen Eingangs- (12) und Ausgangsgrößen (14) durchgeführt wird.

8. Verfahren nach Anspruch 7,
**dadurch gekennzeichnet,**
**dass** die Korrekturgröße (28) auf der Grundlage eines Vergleichs jeweils aktuell berechneter und optimierter Werte der Federsteifigkeit c und/oder des Dämpfungsterms d mit diesen entsprechenden abgelegten Werten ermittelt wird.

9. Verfahren nach Anspruch 8,
**dadurch gekennzeichnet,**
**dass** die Korrekturgröße (28) auf der Grundlage eines Vergleichs jeweils aktueller Werteverläufe der Federsteifigkeit c und/oder des Dämpfungsterms d mit diesen entsprechenden abgelegten Werteverläufen ermittelt wird.

10. Verfahren nach einem der Ansprüche 8 oder 9,
**dadurch gekennzeichnet,**
**dass** die dem Prozess zugeführte Korrekturgröße (28) bei Erkennen eines Einklemmvorganges ein Reversieren oder Stoppen des elektronischen Antriebs (34) bewirkt.

11. Verfahren nach einem der Ansprüche 8 bis 10,

**dadurch gekennzeichnet,**
**dass** die abgelegten Werte und/oder Werteverläufe an sich verändernde Bedingungen adaptiert werden.

**12.** Verfahren nach einem der Ansprüche 7 bis 11,
**dadurch gekennzeichnet,**
**dass** zum Überwachen des Prozesses zusätzlich ein Optimieren der Störgröße $F_S$ durchgeführt wird.

**13.** Verfahren nach einem der Ansprüche 1 bis 6,
**dadurch gekennzeichnet,**
**dass** zum Überwachen des Prozesses die Optimierung wenigstens einer Ausgangsgröße (14) unter Berücksichtigung der gemessenen Eingangs-(12) und Ausgangsgrößen (14) durchgeführt wird.

**14.** Verfahren nach Anspruch 13,
**dadurch gekennzeichnet,**
**dass** als Korrekturgrößen (28) Residuen (15) gebildet werden, die den Unterschied zwischen den aktuell gemessenen Ausgangsgrößen (14) und den optimierten Ausgangsgrößen wiedergeben.

**15.** Verfahren nach Anspruch 14,
**dadurch gekennzeichnet,**
**dass** mit den Residuen (15) eine differenzierte Erkennung von Einklemmvorgängen und anderen externen Störungen durchgeführt wird.

**Claims**

**1.** Method for electronically monitoring and controlling a process for adjusting movable parts, in particular windows and sunroofs of a motor vehicle, for the purpose of ensuring protection against trapping, comprising at least the following steps:

- supplying input (12) and output variables (14) which are characteristic of the process to an identification device (16),
- finding and optimizing typical process variables of a model which is stored in the identification device (16), describes the process and maps the mechanical processes, with a model, which contains a differential equation, of the general form

$$m \bullet \vec{\ddot{x}} = \vec{K} \bullet I + d \bullet \vec{\dot{x}} + c \bullet \vec{x} + \vec{F}_S + m \bullet \vec{g}$$

being used, where
m = mass,
$\ddot{x}$ = acceleration,
K = constant,
I = current,
K•I = drive force $F_A$,
d = damping term,
$\dot{x}$ = speed,
c = spring stiffness,
$F_S$ = disturbance force,
g = gravitational constant
- evaluating the optimized process variables by comparison with process variables stored in the identification device (16),
- determining a correction variable (28) for the process as a function of the comparison,
- influencing the process by supplying the determined correction variable (28) to the process.

**2.** Method according to the preceding claim, **characterized in that**, in the identification device (16), a description of the current profile in an electronic drive (34) is also included in the model.

3. Method according to Claim 2, **characterized in that** an equation of the general form

$$F_A = f(U, I)$$

is also included in the model.

4. Method according to Claim 3, **characterized in that** the equation used for building up current in the case of permanently excited DC motors is a differential equation of the form

$$\vec{K} \bullet \dot{\vec{x}} = -(L \bullet \dot{I}) + U + R \bullet I$$

where
K = constant,
$\dot{x}$ = speed of the movable part,
L = inductance of the drive,
I = electric current in the drive,
$\dot{I}$ = change in electric current in the drive over time,
U = electrical voltage across the drive,
R = electrical resistance of the drive.

5. Method according to one of Claims 2 to 4, **characterized in that** the input variable (12) used is the voltage U across the electronic drive (34).

6. Method according to one of the preceding claims, **characterized in that** the output variable (14) used is the current I flowing through the electronic drive (34) and/or the position x of the movable parts and/or an angular position φ of a rotating part of the electronic drive (34), which angular position is proportional to the position x, and/or one of the time derivatives of the position x and the angular position φ.

7. Method according to one of the preceding claims, **characterized in that** the spring stiffness c and/or the damping term d are optimized, with the measured input (12) and output variables (14) being taken into account, for the purpose of monitoring the process.

8. Method according to Claim 7, **characterized in that** the correction variable (28) is determined on the basis of a comparison of, in each case, actually calculated and optimized values of the spring stiffness c and/or of the damping term d with stored values which correspond to these values.

9. Method according to Claim 8, **characterized in that** the correction variable (28) is determined on the basis of a comparison of, in each case, actual value profiles of the spring stiffness c and/or of the damping term d with stored value profiles which correspond to these value profiles.

10. Method according to either of Claims 8 and 9, **characterized in that** the correction variable (28) supplied to the process causes the electronic drive (34) to reverse or stop when a trapping instance is identified.

11. Method according to one of Claims 8 to 10, **characterized in that** the stored values and/or value profiles are adapted to changing conditions.

12. Method according to one of Claims 7 to 11, **characterized in that** the disturbance variable $F_s$ is additionally optimized for the purpose of monitoring the process.

13. Method according to one of Claims 1 to 6, **characterized in that** at least one output variable (14) is optimized, with the measured input (12) and output variables (14) being taken into account, for the purpose of monitoring the process.

14. Method according to Claim 13, **characterized in that** the correction variables (28) formed are residues (15) which indicate the difference between the actually measured output variables (14) and the optimized output variables.

**15.** Method according to Claim 14, **characterized in that** a differentiated identification of trapping instances and other external disturbances is carried out with the residues (15).

**Revendications**

**1.** Procédé pour surveiller et réguler électroniquement un processus de déplacement de pièces mobiles, en particulier de fenêtres et de toits ouvrants d'un véhicule automobile, afin de garantir une protection contre un pincement, comportant au moins les étapes suivantes :

- envoyer des grandeurs d'entrée (12) et de sortie (14) caractéristiques du processus à un dispositif de reconnaissance (16),
- trouver et optimiser des grandeurs de processus typiques d'un modèle décrivant le processus et mémorisé dans le dispositif de reconnaissance (16), ce modèle reproduisant les processus mécaniques, dans lequel on utilise un modèle contenant une équation différentielle de la forme générale

$$m \bullet \ddot{\vec{x}} = \vec{K} \bullet I + d \bullet \dot{\vec{x}} + c \bullet \vec{x} + \vec{F}_S + m \bullet \vec{g}$$

avec

m = masse
$\ddot{x}$ = accélération
K = constante
I = courant
$K \bullet I$ = force d'entraînement $F_A$
d = terme d'amortissement
$\dot{x}$ = vitesse
c = raideur du ressort
$F_S$ = force perturbatrice
g = constante de gravitation

- évaluation des grandeurs de processus optimisées par comparaison avec des grandeurs de processus mémorisées dans le dispositif de reconnaissance (16),
- détermination d'une grandeur de correction (28) pour le processus en fonction de la comparaison,
- adaptation du processus par introduction de la grandeur de correction déterminée (28) dans le processus.

**2.** Procédé selon l'une quelconque des revendications précédentes,
**caractérisé en ce qu'**
une description de la courbe de courant dans un entraînement électronique (34) intervient également dans le modèle dans le dispositif de reconnaissance (16).

**3.** Procédé selon la revendication 2,
**caractérisé en ce qu'**
une équation de la forme générale

$$F_A = f(U, I)$$

intervient dans le modèle.

**4.** Procédé selon la revendication 3,
**caractérisé en ce que**
avec des moteurs à courant continu à excitation permanente, on utilise comme équation pour la montée de courant une équation différentielle de la forme

$$\vec{K} \bullet \vec{\dot{x}} = -\left(L \bullet \dot{I}\right) + U + R \bullet I$$

dans laquelle

K = constante
$\dot{x}$ = vitesse de la pièce mobile
L = inductance de l'entraînement
I = courant électrique dans l'entraînement
$\dot{I}$ = variation temporelle du courant électrique dans l'entraînement
U = tension électrique dans l'entraînement
R = résistance électrique de l'entraînement.

5. Procédé selon l'une quelconque des revendications 2 à 4,
**caractérisé en ce que**
l'on utilise comme grandeur d'entrée (12) la tension U appliquée à l'entraînement électronique (34).

6. Procédé selon l'une quelconque des revendications précédentes,
**caractérisé en ce que**
comme grandeur de sortie (14) on utilise le courant I circulant à travers l'entraînement électronique (34) et/ou la position x des pièces mobiles et/ou une position angulaire φ d'une pièce tournante de l'entraînement électronique (34) proportionnelle à la position x et/ou une des dérivées temporelles de la position x ou de la position angulaire φ.

7. Procédé selon l'une quelconque des revendications précédentes,
**caractérisé en ce que**
pour surveiller le processus, on effectue l'optimisation de la raideur du ressort c et/ou du terme d'amortissement d en tenant compte des grandeurs d'entrée (12) et de sortie (14) mesurées.

8. Procédé selon la revendication 7,
**caractérisé en ce que**
l'on détermine la grandeur de correction (28) sur la base d'une comparaison de valeurs chaque fois actuellement calculées et optimisées de la raideur du ressort c et/ou du terme d'amortissement d avec ces valeurs mémorisées correspondantes.

9. Procédé selon la revendication 8,
**caractérisé en ce que**
l'on détermine la grandeur de correction (28) sur la base d'une comparaison de courbes de valeurs chaque fois actuelles de la raideur du ressort c et/ou du terme d'amortissement d avec ces courbes de valeurs mémorisées correspondantes.

10. Procédé selon l'une des revendications 8 ou 9,
**caractérisé en ce que**
la grandeur de correction (28) introduite dans le processus provoque une inversion ou un arrêt de l'entraînement électronique (34) lors de la reconnaissance d'une opération de blocage.

11. Procédé selon l'une quelconque des revendications 8 à 10,
**caractérisé en ce que**
l'on adapte les valeurs et/ou les courbes de valeurs mémorisées à des conditions changeantes.

12. Procédé selon l'une quelconque des revendications 7 à 11,
**caractérisé en ce que**
pour surveiller le processus, on effectue en plus une optimisation de la grandeur perturbatrice $F_S$.

13. Procédé selon l'une quelconque des revendications 1 à 6,
**caractérisé en ce que**
pour surveiller le processus, on effectue l'optimisation d'au moins une grandeur de sortie (14) en tenant compte des grandeurs d'entrée (12) et de sortie (14) mesurées.

**14.** Procédé selon la revendication 13,
**caractérisé en ce que**
comme grandeurs de correction (28) on forme des résidus (15) qui reproduisent la différence entre les grandeurs de sortie (14) actuellement mesurées et les grandeurs de sortie optimisées.

**15.** Procédé selon la revendication 14,
**caractérisé en ce que**
l'on effectue avec les résidus (15) une reconnaissance différenciée d'opérations de pincement et d'autres perturbations externes.

EP 1 256 154 B1

# Fig. 1

10

12

16

18

20

14

c

d

F_S

22

26

24

28

13

# Fig. 2

# Fig. 3

30

32

10

34

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19601359 A1

- DE 19633941 A1